# EUROPÄISCHE PATENTSCHRIFT

(11) **EP 4 502 400 B1**
(45) Veröffentlichungstag und Bekanntmachung des Hinweises auf die Patenterteilung: **24.12.2025**
(21) Anmeldenummer: 23189021.1
(22) Anmeldetag: 01.08.2023
(51) Int. Cl.: F16B 19/02, F16B 31/04, F16B 43/00, F16F 1/12, F16L 3/10, H02G 3/32, F16B 2/10

(54) **VORRICHTUNG ZUR EINSTELLUNG DER VORSPANNKRAFT EINER FEDER**
DEVICE FOR ADJUSTING THE PRE-TENSIONING FORCE OF A SPRING
DISPOSITIF DE RÉGLAGE DE LA FORCE DE PRÉCONTRAINTE D'UN RESSORT

(43) Veröffentlichungstag der Anmeldung: 05.02.2025
(73) Patentinhaber: WALTER STAUFFENBERG GMBH & CO. KG, 58791 Werdohl (DE)
(72) Erfinder: König, Ulrich Stefan, 58849 Herscheid (DE); Schulz, Matthäus, 57439 Attendorn (DE)
(74) Vertreter: Patentanwälte Dörner & Kötter PartG mbB

(56) Entgegenhaltungen:
- EP-A1- 3 835 638
- CN-A- 112 211 935
- CN-U- 210 034 249
- KR-B1- 101 190 245
- US-B1- 9 893 677

## Beschreibung

Die Erfindung betrifft eine Vorrichtung zur Einstellung der Vorspannkraft einer Feder nach dem Patentanspruchs 1.

Zur Befestigung von Leitungen, insbesondere Stromkabeln, Rohren und Schläuchen kommen regelmäßig so genannte Schellen zum Einsatz, die einen Schellenkörper umfassen, der aus einem thermoplastischen oder elastomeren Kunststoff oder auch aus Metall hergestellt ist. Der Schellenkörper ist häufig aus zwei gegeneinander spannbaren Befestigungsteilen gebildet, die im montierten Zustand eine Durchführung zur Aufnahme der Leitung bilden.

In der US 9 893 677 B1 ist eine Vorrichtung zur Einstellung der Vorspannkraft einer Feder gemäß den Merkmalen des Oberbegriffs des Anspruchs 1.

In der EP 3 835 638 B1 ist Vorrichtung zur Befestigung von Leitungen beschrieben, die zwei oder drei gegeneinander verspannbare Befestigungsteile aufweist. Die Befestigungsteile sind jeweils über ein Scharnier schwenkbar miteinander verbunden. Das erste und das letzte Befestigungsteil sind über eine Spannvorrichtung lösbar miteinander verbunden. Hierbei ist an dem Ende eines äußeren Befestigungsteils ein Spannverschluss angeordnet, dessen Spannhaken mit einem an dem anderen äußeren Befestigungsteil angeordneten Gegenhaken in Eingriff bringbar ist. Der Spannhaken ist endseitig in Form einer Öse ausgebildet und ist über eine Gewindespindel mit dem Spannbügel des Spannverschlusses verbunden.

Zwischen den Schenkeln eines U-förmig ausgebildeten Spannbügels ist eine Welle rotierbar gelagert. In die Welle ist radial eine Gewindebohrung eingebracht, in welche die Gewindespindel des Spannhakens eingeschraubt ist. Auf den Spannhaken ist eine Schraubenfeder aufgeschoben, die zwischen Spannhaken und Welle vorgespannt ist. Endseitig ist die Gewindespindel des Spannhakens über eine Sicherungsmutter gesichert. Zwischen Sicherungsmutter und Spannbügel ist ein weiteres Federelement auf der Gewindespindel angeordnet. Durch diese weitere Feder ist die erforderliche Klemmkraft des Spannverschlusses auch bei abnehmender Elastizität der aus einem Elastomerwerkstoff hergestellten Klemmblöcke gewährleistet.

Die vorstehend beschriebene Befestigungsvorrichtung hat sich in der Praxis bewährt. Der Spannverschluss ermöglicht eine einfache und schnelle Aufnahme und Befestigung von Leitungen. Durch das zweite Federelement ist eine ausreichende Vorspannung erzielt, um einem Lösen der Befestigungsvorrichtung bei abnehmender Elastizität der aus einem Elastomerwerkstoff hergestellten Klemmblöcke entgegenzuwirken. Voraussetzung für eine langfristig zuverlässige Spannverbindung ist hier eine ausreichende Vorspannung der weiteren Feder.

Hier setzt die vorliegende Erfindung an. Der Erfindung liegt die Aufgabe zu Grunde, Vorrichtung zur Einstellung einer Vorspannkraft einer Feder bereitzustellen, mit der eine ausreichende Vorspannung gewährleistet ist. Gemäß der Erfindung wird diese Aufgabe durch eine Vorrichtung mit den Merkmalen des Patentanspruchs 1 gelöst.

Mit der Erfindung ist eine Vorrichtung zur Einstellung einer Vorspannkraft einer Feder bereitgestellt, mit der eine ausreichende Vorspannung gewährleistet ist. Dadurch, dass zwei Aufnahmekörper angeordnet sind, die gegenseitig durch den jeweils anderen Aufnahmekörper verschiebbar geführt sind und zwischen denen die Feder gehalten ist, wobei die Aufnahmekörper sowie die Feder eine zueinander fluchtende Öffnung zur Durchführung der Gewindespindel aufweisen und wobei Mittel zur Anzeige des Abstandes der beiden Aufnahmekörper zueinander angeordnet sind, ist die Einstellung einer definierten Vorspannung ermöglicht.

Gemäß der Erfindung umfassen die Mittel zur Anzeige des Abstandes Markierungen, die derart an den beiden Aufnahmekörpern angeordnet sind, dass sie entsprechend der relativen axialen Bewegung der beiden Aufnahmekörper zueinander eine Bewegung der Markierungen eines Aufnahmekörpers entlang der Markierungen des anderen Aufnahmekörpers erfolgt. Hierdurch ist eine einfache optische Erfassung des Erreichens der erforderlichen Vorspannkraft erzielt, bei der Markierungen der beiden Aufnahmekörper miteinander fluchten.

In Ausgestaltung der Erfindung sind die Aufnahmekörper becherartig ausgebildet und teleskopartig ineinandergreifend angeordnet, wobei an der Außenmantelfläche des inneren Aufnahmekörpers eine Markierung angeordnet ist, die axial beabstandet zueinander angeordnete Linien umfasset, wobei die Außenkante des äußeren Aufnahmekörpers dessen Markierung bildet. Hierdurch ist ein einfacher, robuster Aufbau der Vorrichtung erzielt.

In Alternativer Ausgestaltung der Erfindung weist wenigstens ein Aufnahmekörper wenigstens einen in Axialrichtung verlaufenden Steg auf, der jeweils entweder in eine Aussparung des anderen Aufnahmekörpers eingreift, in der er axial verschiebbar ist oder außen entlang dem anderen Aufnahmekörper verschiebbar ist. Bevorzugt weisen die Aufnahmekörper jeweils eine mit einer Öffnung versehene Anlageplatte auf, an der orthogonal zu dieser beabstandet zueinander umlaufend Stege angeordnet sind, die Aussparungen begrenzen, wobei die Stege der beiden Aufnahmekörper jeweils in die Aussparungen des anderen Aufnahmekörpers eingreifen, wodurch eine kämmende Verbindung gebildet ist. Die Feder ist zwischen den Anlageplatten der beiden Aufnahmekörper gehalten und kann durch eine Relativbewegung der beiden Aufnahmekörper aufeinander zu vorgespannt werden.

In weiterer Ausgestaltung der Erfindung weisen die Aufnahmekörper jeweils drei um 120° versetzt zueinander an die jeweilige Anlageplatte angestellte Stege auf. Hierdurch ist eine stabile Anordnung erzielt. Vorzugsweise ist die Anlageplatte in Form eines Hexagons ausgebildet, wobei an jeder zweiten Seite ein Steg angeordnet ist.

In Weiterbildung der Erfindung sind die Markierungen durch wenigstens zwei axial beabstandet zueinander angeordnete, umlaufende Striche umfassende Skalen gebildet. Hierdurch ist eine Position der beiden Aufnahmekörper zueinander und damit eine definierte Vorspannung einstellbar.

In Ausgestaltung der Erfindung sind die Aufnahmekörper identisch ausgebildet. Hierdurch ist eine kostengünstige Herstellung unterstützt. Vorteilhaft sind die Aufnahmekörper als Blechformteile hergestellt.

In weiterer Ausgestaltung der Erfindung ist das Federelement durch eine Spiraldruckfeder gebildet, wobei die Öffnungen der Aufnahmekörper einrahmend jeweils ein in Richtung des anderen Aufnahmekörpers gerichteter Kragen angeordnet ist, den die Spiraldruckfeder umfasst. Hierdurch ist ein zuverlässiger Sitz der Spiraldruckfeder in der Vorrichtung erzielt.

Gegenstand der Erfindung ist weiterhin eine Schelle, umfassend wenigstens zwei Schellenteile, die über einen Spannverschluss gegeneinander spannbar sind, wobei der Spannverschluss eine über eine Feder vorgespannte Gewindespindel aufweist, auf der eine Vorrichtung der vorgenannten Art angeordnet ist, welche die Feder umfasst.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die schematische Darstellung einer Vorrichtung zur Einstellung der Vorspannkraft einer Feder;
- Figur 2: die Darstellung der Vorrichtung aus Figur 1 in einer Seitenansicht
a) mit einer unzureichenden Federvorspannung (Markierungen des unteren Aufnahmekörpers sind unterhalb der Markierungen des oberen Aufnahmekörpers angeordnet);
b) mit einer ausreichenden Federvorspannung (Markierungen des unteren Aufnahmekörpers fluchten mit den Markierungen des oberen Aufnahmekörpers);

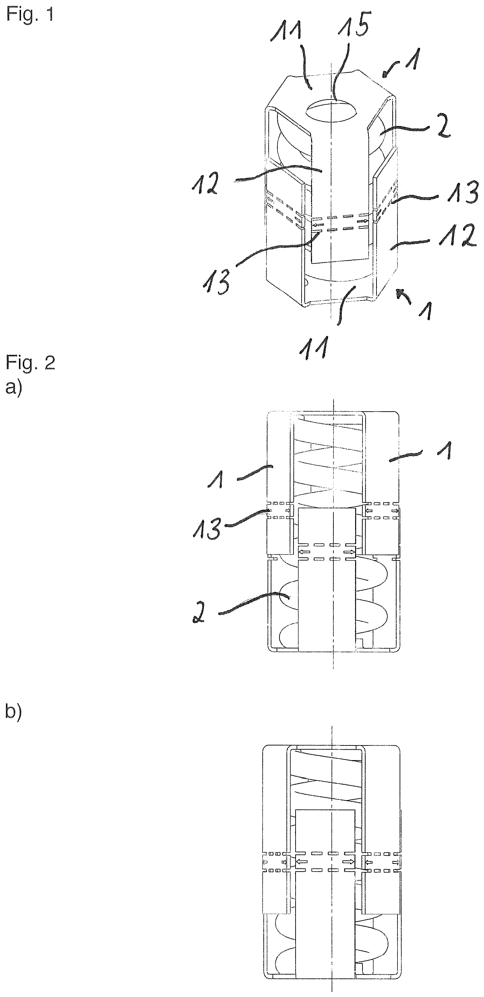

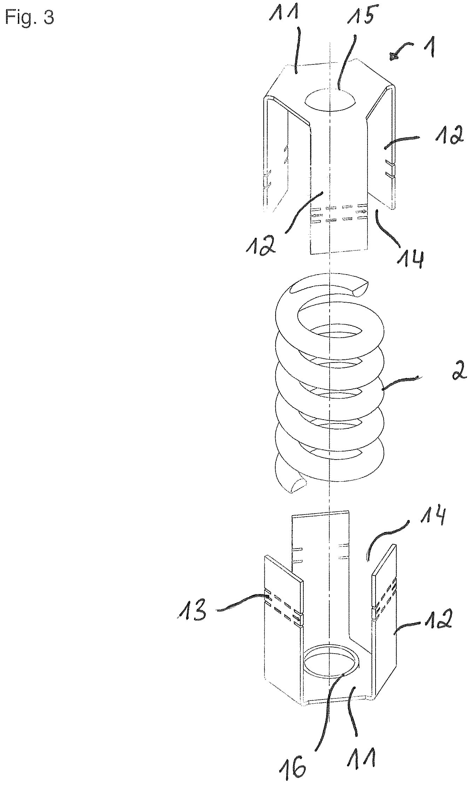

- Figur 3: die Vorrichtung aus Figur 1 in einer Explosionsdarstellung;

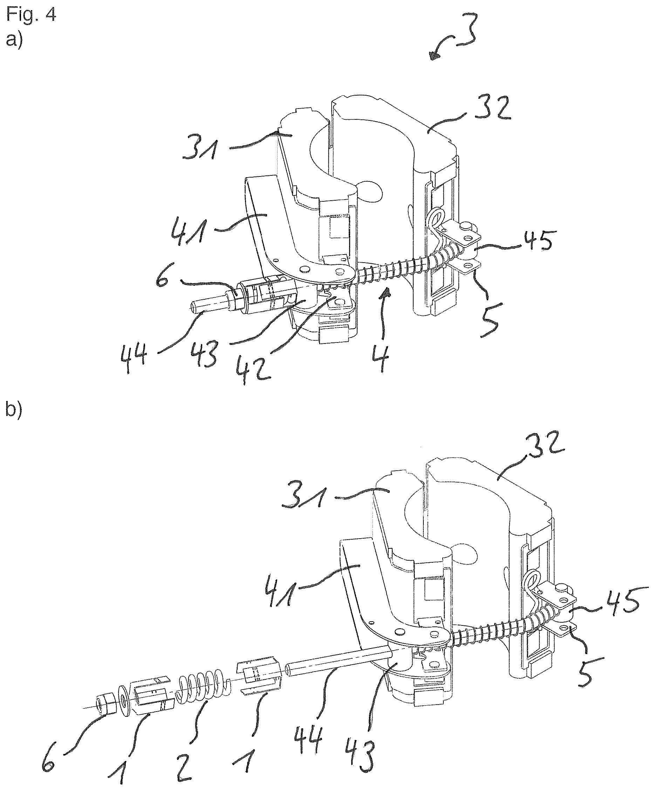

- Figur 4: die schematische Darstellung einer Schelle zur Aufnahme von Leitungen
a) in montiertem Zustand;
b) in teilweiser Explosionsdarstellung.

Die als Ausführungsbeispiel gewählte Vorrichtung zur Einstellung der Vorspannkraft einer Feder umfasst zwei identisch ausgebildete Aufnahmekörper 1, zwischen denen eine Spiraldruckfeder 2 angeordnet ist.

Die Aufnahmekörper 1 sind jeweils als Blechstanzbiegeteil hergestellt und umfassen eine Anlageplatte 11, an der orthogonal zu dieser jeweils drei um 120 Grad versetzt zueinander umlaufend Stege 12 angeordnet sind, die Aussparungen 14 begrenzen. Im Ausführungsbeispiel ist die Anlageplatte 1 in Form eines Hexagons ausgebildet, wobei an jeder zweiten Seite einer der drei Stege 12 angeordnet ist. Zentrisch ist in die Anlageplatte eine konische Einformung eingebracht, die eine kreisförmige Öffnung 15 begrenzt und durch die auf der den Stegen 12 zugewandten Unterseite der Anlageplatte 1 ein umlaufender Kragen 16 ausgebildet ist. Die Stege 12 sind außen auf gleicher Höhe jeweils mit einer Skala 13 versehen, die durch Strichlinien gebildet sind.

Die Aufnahmekörper 1 sind derart zusammengesteckt, dass die Stege 12 eines Aufnahmekörpers 1 jeweils in eine Aussparung 14 des gegenüberliegenden Aufnahmekörpers 1 eingreifen, wodurch die relativ zueinander verschieblich kämmend miteinander verbunden sind. Die Spiraldruckfeder 2 liegt jeweils mit einem Ende den Kragen 16 eines Aufnahmekörpers 1 zumindest bereichsweise einfassend an dessen Anlagelatte 11 an.

In Figur 1 ist eine derart montierte Vorrichtung gezeigt, wobei die beiden Aufnahmekörper 1 derart axial zueinander positioniert sind, dass die Skalen 13 der Stege 12 der beiden Aufnahmekörper 1 miteinander fluchten. In Figur 2 ist keine ausreichende Vorspannkraft der Spiraldruckfeder 2 erzielt: Die Skalen 13 der Stege 12 des unteren Aufnahmekörpers 1 befinden sich unterhalb der Skalen 13 der Stege 12 des oberen Aufnahmekörpers 1.

In Figur 4 ist eine Schelle 3 mit einem Spannverschluss 4 gezeigt, der mit einer Vorspannvorrichtung der zuvor beschriebenen Art versehen ist. Die Schelle 3 umfasst ein erstes Schellenteil 31 und ein zweites Schellenteil 32, die über ein Scharnier gelenkig miteinander verbunden sind, wobei ein Spannverschluss 4 angeordnet ist, über den die beiden Schellenteile 31, 32 gegeneinander verspannbar sind.

Der Spannverschluss 4 umfasst einen Spannbügel 41, der an einem Ausleger 42, der an einem Schellenteil 31 befestigt ist, schwenkbar gelagert ist. Der Spannbügel 41 ist aus einem U-förmig gebogenen Blech gebildet, zwischen dessen Schenkeln eine Welle 43 rotierbar gelagert ist. In die Welle 43 ist radial eine Bohrung eingebracht, durch die eine Gewindespindel 44 geführt ist, die endseitig einen Hammerkopf 45 aufweist, mit dem die eine an dem zweiten Schellenteil 32 angeordnete Aufnahme 5 hintergreift. Die Gewindespindel 44 ist durch die Öffnungen 15 der beiden Aufnahmekörper 1 der Vorspanneinrichtung sowie durch die zwischen diesen angeordnete Spiraldruckfeder 2 geführt, wonach eine Vorspannschraube 6 auf die Gewindespindel 44 aufgeschraubt ist. Über die Vorspannschraube 6 ist die Vorspanneinrichtung gegen die Welle 43 gedrückt, wobei durch Anziehen der Vorspannschraube 6 der an dieser anliegende Aufnahmekörper 1 gegen den gegenüberliegenden Aufnahmekörper 1 bewegt wird, wodurch die Spiraldruckfeder 2 zunehmend gespannt wird. Eine ausreichende Vorspannung ist dann erreicht, wenn die - von außen sehr gut sichtbaren - Skalen 13 der Stege 12 der beiden Aufnahmekörper 1 miteinander fluchten.

## Patentansprüche

1. Vorrichtung zur Einstellung der Vorspannkraft einer Feder, umfassend zwei Aufnahmekörper (1), die gegenseitig durch den jeweils anderen Aufnahmekörper (1) verschiebbar geführt sind und zwischen denen die Feder (2) gehalten ist, wobei die Aufnahmekörper (1) sowie die Feder (2) eine zueinander fluchtende Öffnung (15) zur Durchführung einer Gewindespindel (44) aufweisen und wobei Mittel zur Anzeige des Abstandes der beiden Aufnahmekörper (1) zueinander angeordnet sind, **dadurch gekennzeichnet, dass** die Mittel zur Anzeige des Abstandes Markierungen umfassen, die derart an den beiden Aufnahmekörpern (1) angeordnet sind, dass sie entsprechend der relativen axialen Bewegung der beiden Aufnahmekörper (1) zueinander aneinander eine Bewegung der Markierungen eines Aufnahmekörpers (1) entlang der Markierungen des anderen Aufnahmekörpers (1) erfolgt.

2. Vorrichtung nach Anspruch 1, **dadurch gekennzeichnet, dass** die Aufnahmekörper becherartig ausgebildet und teleskopartig ineinandergreifend angeordnet sind, wobei an der Außenmantelfläche des inneren Aufnahmekörpers eine Markierung angeordnet ist, die axial beabstandet zueinander angeordnete Linien umfasset, wobei die Außenkante des äußeren Aufnahmekörpers dessen Markierung bildet.

3. Vorrichtung nach Anspruch 1, **dadurch gekennzeichnet, dass** wenigstens ein Aufnahmekörper (1) wenigstens einen in Axialrichtung verlaufenden Steg aufweist, der jeweils entweder in eine Aussparung (14) des anderen Aufnahmekörpers (1) eingreift, in der er axial verschiebbar ist oder außen entlang an dem anderen Aufnahmekörper (1) verschiebbar ist.

4. Vorrichtung nach Anspruch 3, **dadurch gekennzeichnet, dass** die Aufnahmekörper (1) eine mit einer Öffnung (15) versehene Anlageplatte (11) aufweisen, an der orthogonal zu dieser beabstandet zueinander umlaufend Stege (12) angeordnet sind, die Aussparungen begrenzen (14), wobei die Stege (12) der beiden Aufnahmekörper (1) jeweils in die Aussparungen (14) des anderen Aufnahmekörpers (1) eingreifen.

5. Vorrichtung nach Anspruch 4, **dadurch gekennzeichnet, dass** die Aufnahmekörper (1) jeweils drei um 120° versetzt zueinander an die jeweilige Anlageplatte (11) angestellte Stege (12) aufweisen.

6. Vorrichtung nach Anspruch 4 oder 5**dadurch gekennzeichnet, dass** wenigstens zwei benachbarte Stege (12) der beiden Aufnahmekörper (1) jeweils mit einer Markierung versehen sind.

7. Vorrichtung nach einem der vorgenannten Ansprüche, **dadurch gekennzeichnet, dass** die Markierungen durch wenigstens zwei axial beabstandet zueinander angeordnete, umlaufende Striche umfassende Skalen (13) gebildet sind.

8. Vorrichtung nach einem der Ansprüche 3 bis 7, **dadurch gekennzeichnet, dass** die Aufnahmekörper (1) identisch ausgebildet sind.

9. Vorrichtung nach einem der vorgenannten Ansprüche, **dadurch gekennzeichnet, dass** die Aufnahmekörper (1) als Blechformteile hergestellt sind.

10. Vorrichtung nach einem der vorgenannten Ansprüche, **dadurch gekennzeichnet, dass** das Federelement durch eine Spiraldruckfeder (2) gebildet ist, wobei die Öffnungen (15) der Aufnahmekörper (1) einrahmend jeweils ein in Richtung des anderen Aufnahmekörpers (1) gerichteter Kragen (16) angeordnet ist, den die Spiraldruckfeder (2) umfasst.

11. Schelle (3), umfassend wenigstens zwei Schellenteile (31, 32), die über einen Spannverschluss (4) gegeneinander spannbar sind, wobei der Spannverschluss (4) eine über eine Feder (2) vorgespannte Gewindespindel (44) aufweist, **dadurch gekennzeichnet, dass** auf der Gewindespindel (44) eine Vorrichtung nach einem der vorgenannten Ansprüche angeordnet ist, welche die Feder (2) umfasst.

## Claims

1. Device for adjusting the pre-tensioning force of a spring, comprising two receiving bodies (1) that are mutually movably guided by the respective other receiving body (1) and between which the spring (2) is held, wherein the receiving bodies (1) and the spring (2) each have an opening (15) aligned with each other for feeding through a threaded spindle (44) and wherein means for indicating the distance of the two receiving bodies (1) from each other are arranged, **characterised in that** the means for indicating the distance comprise markings that are arranged on the two receiving bodies (1) so that the markings of one receiving body (1) move along the markings of the other receiving body (1) in accordance with the relative axial movement of the two receiving bodies (1) to each other along each other.

2. Device in accordance with claim 1, **characterised in that** the receiving bodies are formed cup-shaped and arranged engaging in each other in a telescope-like manner, wherein a marking is arranged on the outer lateral surface of the inner receiving body that comprises lines arranged axially at a distance from each other, wherein the outer edge of the outer receiving body forms its marking.

3. Device in accordance with claim 1, **characterised in that** at least one receiving body (1) has at least one web running in the axial direction that each either engages with a recess (14) of the other receiving body (1) in which it can be shifted axially or can be moved along the outside of the other receiving body (1).

4. Device in accordance with claim 3, **characterised in that** the receiving bodies (1) have a contact plate (11) which has an opening (15) on which webs (12) that delimit recesses (14) are arranged orthogonally to it with a distance from each other, wherein the webs (12) of the two receiving bodies (1) each engage in the recesses (14) of the respective other receiving body (1).

5. Device in accordance with claim 4, **characterised in that** the receiving bodies (1) have three webs (12) offset by 120° to each other and applied to the respective contact plate (11).

6. Device in accordance with claim 4 or 5, **characterised in that** at least two adjacent webs (12) of the two receiving bodies (1) are each provided with a marking.

7. Device in accordance with one of the above claims, **characterised in that** the markings are formed by at least two scales (13) that comprise circumferential lines and are arranged at an axial distance from each other.

8. Device in accordance with one of claims 3 to 7, **characterised in that** the receiving bodies (1) are formed identically.

9. Device in accordance with one of the preceding claims, **characterised in that** the receiving bodies (1) are formed as sheet-metal parts.

10. Device in accordance with one of the preceding claims, **characterised in that** the spring element is formed by a spiral pressure spring (2), wherein a respective collar (16) comprised by the spiral pressure spring (2) and facing the other receiving body (1) is arranged framing the openings (15, 16) of the receiving bodies (1).

11. Clamp (3), comprising at least two clamp parts (31, 32), that can be tensioned against each other via a clamping lock (4), wherein the clamping lock (4) has a threaded spindle (44) pre-tensioned via a spring (2), **characterised in that** a device in accordance with one of the preceding claims that comprises the spring (2) is arranged on the threaded spindle (44).

## Revendications

1. Dispositif de réglage de la force de précontrainte d'un ressort, comprenant deux corps réceptacles (1) guidés réciproquement coulissants par l'autre corps réceptacle (1) respectif et entre lesquels est retenu le ressort (2), sachant que les corps réceptacles (1) ainsi que le ressort (2) présentent des ouvertures (15) mutuellement alignées pour permettre le passage d'une broche filetée (44), et sachant que sont disposés des moyens pour afficher l'écart réciproque entre les deux corps réceptacles (1), **caractérisé en ce que** les moyens d'affichage de l'écart comprennent des marquages disposés contre les deux corps réceptacles (1) de sorte qu'en fonction du mouvement axial relatif réciproque des deux corps réceptacles (1) l'un contre l'autre, un mouvement des marquages d'un corps réceptacle (1) a lieu le long des marquages de l'autre corps réceptacle (1).

2. Dispositif selon la revendication 1, **caractérisé en ce que** les corps réceptacles sont configurés en forme de gobelets et pénétrant de façon télescopique l'un dans l'autre, sachant que contre la surface enveloppante extérieure du corps réceptacle intérieur est disposé un marquage comprenant des lignes disposées mutuellement distantes axialement, sachant que le bord extérieur du corps réceptacle extérieur constitue son marquage.

3. Dispositif selon la revendication 1, **caractérisé en ce qu'**au moins un corps réceptacle (1) présente au moins une nervure au tracé en direction axiale, nervure qui respectivement soit pénètre dans un évidement (14) de l'autre corps réceptacle (1), évidement dans lequel il est possible de la faire coulisser axialement, soit est déplaçable à l'extérieur contre l'autre corps réceptacle (1) le long de ce dernier.

4. Dispositif selon la revendication 3, **caractérisé en ce que** les corps réceptacles (1) présentent une plaque d'applique (11) munie d'une ouverture (15), plaque contre laquelle sont disposées perpendiculairement à celle-ci des nervures (12) périphériques délimitant des évidements (14), sachant que les nervures (12) des deux corps réceptacles (1) pénètrent respectivement dans les évidements (14) de l'autre corps réceptacle (1).

5. Dispositif selon la revendication 4, **caractérisé en ce que** les corps réceptacles (1) présentent respectivement trois nervures (12) mutuellement distantes de 120°, en applique contre la plaque d'applique (11) respective.

6. Dispositif selon la revendication 4 ou 5, **caractérisé en ce qu'**au moins deux nervures (12) voisines des deux corps réceptacles (1) sont respectivement munies d'un marquage.

7. Dispositif selon l'une des revendications précédentes, **caractérisé en ce que** les marquages sont formés par au moins deux échelles (13) comprenant des traits périphériques et disposées axialement distantes les unes des autres.

8. Dispositif selon l'une des revendications 3 à 7, **caractérisé en ce que** les corps réceptacles (1) sont configurés identiques.

9. Dispositif selon l'une des revendications précédentes, **caractérisé en ce que** les corps réceptacles (1) sont fabriqués sous forme de pièces en tôle moulée.

10. Dispositif selon l'une des revendications précédentes, **caractérisé en ce que** l'élément ressort est formé par un ressort de compression hélicoïdal (2), sachant qu'est disposé respectivement - encadrant les ouvertures (15, 16) des corps réceptacles (1) - un collet (16) regardant en direction de l'autre corps réceptacle (1) et qu'entoure le ressort de compression hélicoïdal (2).

11. Collier (3), comprenant au moins deux parties (31, 32) de collier qu'il est possible de serrer l'une contre l'autre via une fermeture à genouillère (4), sachant que la fermeture à genouillère (4) présente une broche filetée (44) précontrainte via un ressort (2), **caractérisé en ce qu'**est disposé sur la broche filetée (44) un dispositif selon l'une des revendications précédentes, qui comprend le ressort (2).
